# DEMANDE DE BREVET EUROPEEN

(11) **EP 0 697 537 A1**
(43) Date de publication de la demande: **21.02.1996**
(21) Numéro de dépôt: 95420185.1
(22) Date de dépôt: 04.07.1995
(51) Int. Cl.: F16D 66/02

(54) **Témoin d'usure de plaquette de frein pour véhicule automobile**

(30) Priorité: 19.07.1994 FR 9409129
(71) Demandeur: COMPAGNIE FRANCAISE DE CABLAGE, F-21000 Dijon (FR)
(72) Inventeur: Scrabalat, Philippe, F-38180 Seyssins (FR)
(74) Mandataire: Laurent, Michel

(57) **Abrégé**

Ce témoin d'usure de plaquette de frein pour véhicule automobile comprend un câble électrique (1) isolé dans une gaine plastique, et destiné à acheminer un signal électrique signalant l'usure de la plaquette à laquelle il est fixé, et comportant à l'une de ses extrémités un embout (3), susceptible d'être reçu dans le siège prévu à cet effet dans la partie postérieure de la plaquette, ce dit embout présentant un orifice central (7) destiné à recevoir le câble.

L'embout est destiné à être inséré latéralement en force dans le siège de la plaquette.

L'embout présente sur la face interne de son orifice central (7), un taraudage (10), sur partie au moins de sa longueur, de sorte à permettre son vissage en force sur la gaine plastique du câble pour assurer sa fixation sur celui-ci.

## Description

### Domaine technique

L'invention concerne un témoin d'usure de plaquette de frein pour véhicule automobile.

### Art antérieur

De manière connue, de tels témoins se présentent sous la forme d'un câble électrique, comportant un embout en matériau isolant à son extrémité, venant se fixer au niveau de la plaquette de frein dont on désire détecter l'usure. L'embout du câble s'use donc en même temps que la plaquette. Lorsque l'usure atteint l'extrémité du fil électrique, il se crée un contact électrique avec le disque de frein, lequel est généralement relié à la masse électrique du véhicule. Ce contact électrique est utilisé pour signaler l'usure des plaquettes de frein, notamment au tableau de bord du véhicule.

L'embout du câble est réalisé de manière générale en polysulfure de phénylène (PPS), en polyamide 6-6, en polyamide 4-6, en polyether éthercétone (PEEK), en polytétrafluoroéthylène (PTFE) ou en tout autre matériau présentant des caractéristiques thermiques et mécaniques au moins équivalentes.

Parmi les techniques de fixation de l'embout avec le câble, on connaît le collage dont les inconvénients principaux sont d'une part la difficulté d'automatiser cette étape de fixation et d'autre part, la nécessité d'employer des colles particulières. En effet lors du collage il faut s'assurer du bon positionnement de l'embout par rapport au câble et également vérifier que le collage a bien été réalisé, ce qui rend l'automatisation difficile. En outre, il est bien connu que lors des phases de freinage les organes de dissipation d'énergie et leurs accessoires comme les témoins d'usure sont portés à haute température de sorte que les colles utilisées doivent être choisies dans des gammes particulières spécifiques et donc onéreuses, ce qui rend économiquement inintéressant le collage. De plus, la colle doit assurer une certaine étanchéité de telle sorte que le contact électrique ne soit pas établi malencontreusement par la présence d'eau vers la zone de fin du câble électrique.

De manière connue le câble est fixé sur la base de la plaquette de frein par diverses méthodes, notamment le clipsage et l'utilisation de rondelle-frein. La technique utilisant une rondelle-frein consiste à emprisonner la semelle de la plaquette entre l'embout et la dite rondelle. Cette technique présente comme inconvénient évident de nécessiter l'insertion de la rondelle avant la fixation de l'embout, ce qui constitue une opération supplémentaire.

Dans le document FR-A-2 697 066 est présentée une technique consistant à dipser l'embout dans la semelle de la plaquette. Cette fixation se fait par introduction dans la semelle de l'embout, qui comporte un jonc annulaire excroissant qui, une fois qu'il a traversé la semelle, maintient l'embout et donc le câble solidaires de la plaquette. Cette méthode nécessite que les dimensions du jonc soient précises.

### Exposé de l'invention

L'objet de l'invention est de pallier ces différents inconvénients. Elle propose un témoin d'usure de plaquette de frein comprenant un câble électrique isolé dans une gaine plastique, et destiné à acheminer un signal électrique signalant l'usure de la plaquette à laquelle il est fixé, et comportant à l'une de ses extrémités un embout susceptible d'être reçu dans le siège prévu à cet effet dans la partie postérieure de la plaquette, le dit embout présentant un orifice central destiné à recevoir le câble.

Ce témoin se caractérise :
- en ce que l'embout est destiné à être inséré dans le siège de la plaquette en force et par la face latérale dudit siège,
- et en ce qu'il présente sur la face interne de son orifice central, un taraudage, sur partie au moins de sa longueur, de sorte à permettre son vissage en force sur la gaine plastique du câble pour assurer sa fixation sur celui-ci.

En d'autres termes, l'invention combine :
- la fixation de l'embout sur le câble par vissage en force,
- la fixation du témoin sur la plaquette par insertion en force de celui-ci dans le siège de ladite plaquette, cette insertion se faisant par un mouvement dans le plan de la plaquette et non pas perpendiculairement à ce plan.

Dans une forme pratique de réalisation, l'embout est en forme d'haltères symétriques, dont la distance inter-haltères correspond sensiblement à l'épaisseur du siège de la plaquette.

Avantageusement, en pratique le diamètre du taraudage est inférieur au diamètre de la gaine plastique du câble, de sorte que le vissage se fait en force et que le taraudage mord dans la gaine, ce qui a pour conséquence d'assurer une fixation efficace et étanche.

De manière préférée, l'embout est réalisé en polytétrafluoroéthylène (PTFE) injectable, de sorte que l'embout est suffisamment déformable pour entrer en force dans le logement prévu à cet effet dans la plaquette.
Dans une forme de réalisation, l'embout est obtenu par moulage par injection, puis dévissage hors du moule notamment par voie hydraulique ou pneumatique.

### Description sommaire des dessins

La manière dont l'invention peut être réalisée et les avantages qui en découlent ressortiront mieux de l'exemple de réalisation qui suit à titre indicatif et non limitatif à l'appui des figures annexées.

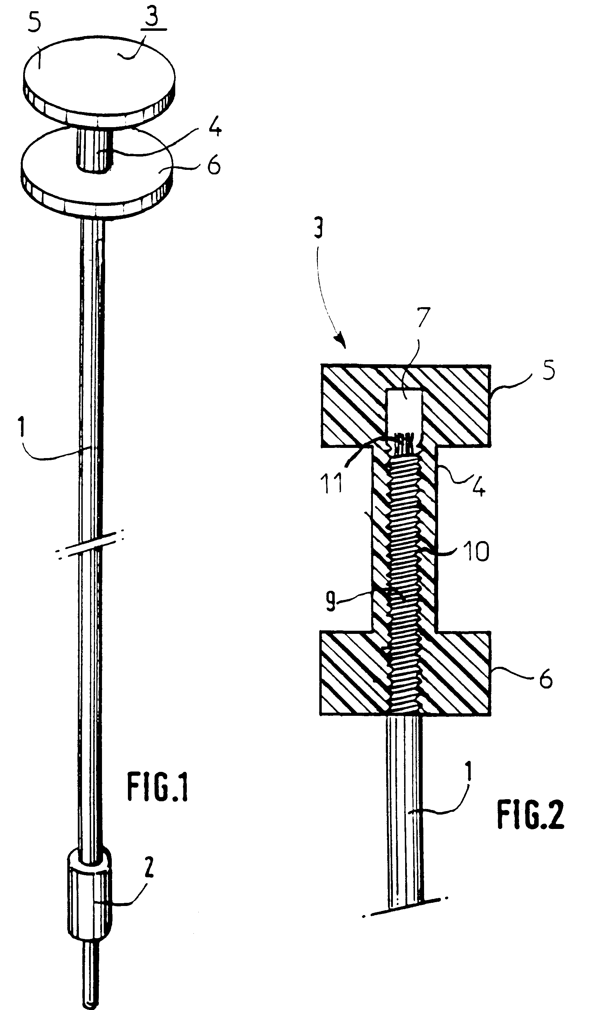

La figure 1 est une représentation schématique du témoin d'usure conforme à l'invention.

La figure 2 est une vue en coupe dudit embout destiné à venir s'adapter sur le témoin conformément à l'invention.

### Mode de réalisation de l'invention

Le témoin conforme à l'invention comporte fondamentalement un câble (1) isolé au moyen d'une gaine plastique, typiquement réalisée en polychlorure de vynil (PVC). L'une des extrémités de ce câble est reçoit une prise mâle (2), destinée à s'enficher dans une prise femelle correspondante reliée au boiter de traitement de l'information d'usure de plaquettes de frein ou plus simplement au tableau de bord.

Le témoin se termine à son autre extrémité par l'embout (3) caractéristique. Cet embout comporte une partie centrale (4) cylindrique et deux extrémités (5, 6) cylindriques également, mais de longueur inférieure et de diamètre supérieur à la partie centrale. L'embout est destiné à prendre place dans une cavité cylindrique ou siège prévue à cet effet dans la semelle de la plaquette. L'ouverture de cette cavité ou lumière vers l'extérieur de la semelle est de dimension inférieure au diamètre de l'embout dans sa partie centrale (4). Lors de la fixation du témoin, l'embout est inséré en force dans la dite cavité dans un mouvement latéral, c'est à dire effectué dans le plan de la plaquette. La partie centrale se trouve comprimée pendant son passage par la zone resserrée ou lumière. Cette compression est rendue possible grâce à l'emploi de polytétrafluoroéthylène. Après fixation, les deux extrémités de l'embout (5, 6) empêchent tout mouvement du témoin par rapport à la plaquette dans le sens de l'usure de celle-ci.

La fixation de l'embout sur le câble est réalisée grâce à l'orifice (7) qui comprend un taraudage (10). Ce taraudage s'étend sur une bonne partie de l'intérieur de l'orifice (7). Le diamètre de la gaine du câble est supérieur au diamètre du taraudage, de sorte que, lors du vissage, la gaine (9) subit une compression ce qui a pour conséquences avantageuses d'assurer une bonne résistance à l'arrachement et une certaine étanchéité de l'orifice. Typiquement, le pas de vis est de 0,5 à 0,6 mm, ce qui assure une résistance à l'arrachement supérieure à 150 Newtons.

Le câble (1) est ainsi vissé sur une longueur typique de 15 mm, mais cette longueur peut varier selon la côte d'allumage voulue par les constructeurs, c'est-à-dire du degré d'usure devant être détecté par l'affleurement du câble électrique (11).

L'opération de vissage est facilement automatisable avec les machines et autres outils disponibles à ce jour, ce qui génère des gains de productivité appréciables.

L'embout est réalisé en polytétrafluoroéthylène (PTFE) injectable, sans nécessiter de reprise ultérieure. Le devissage de l'embout hors de l'empreinte du moule s'effectue de manière traditionnelle par voie hydraulique ou pneumatique selon des techniques bien connues de l'homme de métier.

Eu égard au matériau choisi, à savoir le polytétrafluoroéthylène (PTFE) , il est donc possible d'aboutir à une fixation en force de l'embout sur le siège de la plaquette, facilitant ainsi l'opération de fixation, et corollairement l'automatisation de la mise en place dudit embout sur le câble

## Revendications

**1/** Témoin d'usure de plaquette de frein pour véhicule automobile comprenant un câble électrique (1) isolé dans une gaine plastique (9), et destiné à acheminer un signal électrique signalant l'usure de la plaquette à laquelle il est fixé, et comportant à l'une de ses extrémités un embout (3) susceptible d'être reçu dans le siège prévu à cet effet dans la partie postérieure de la plaquette, ce dit embout présentant un orifice (7) central destiné à recevoir le câble (1), ***caractérisé:***
- en ce que l'embout (3) est destiné à être inséré latéralement et en force dans le siège de la plaquette,
- et en ce qu'il présente sur la face interne de son orifice central (7), un taraudage (10), sur partie au moins de sa longueur, de sorte à permettre son vissage en force sur la gaine (9) plastique du câble (1) pour assurer sa fixation sur celui-ci.

**2/** Témoin d'usure de plaquette de frein selon la revendication 1, ***caractérisé*** en ce que l'embout est en forme d'haltères symétriques (4, 5, 6), dont la distance inter-haltères correspond sensiblement à l'épaisseur du siège de la plaquette.

**3/** Témoin d'usure de plaquette de frein selon l'une des revendications 1 ou 2, ***caractérisé*** en ce que le diamètre du taraudage est inférieur au diamètre de la gaine plastique du câble.

**4/** Témoin d'usure de plaquette de frein selon l'une des revendications 1 à 3, ***caractérisé*** en ce que l'embout est en polytétrafluoroéthylène (PTFE) injectable.

**5/** Témoin d'usure de plaquette de frein selon l'une des revendications 1 à 4, ***caractérisé*** en ce que l'embout est obtenu par moulage par injection, puis dévissage hors du moule par voie hydraulique ou pneumatique.
